# EUROPÄISCHE PATENTSCHRIFT

(11) **EP 0 393 229 B1**
(45) Veröffentlichungstag und Bekanntmachung des Hinweises auf die Patenterteilung: **17.03.1993**
(21) Anmeldenummer: 89107749.7
(22) Anmeldetag: 28.04.1989
(51) Int. Cl.: B67D 5/01, B64F 1/28

(54) **Versenkbares Betankungssystem**
Removable refuelling system
Système escamotable d'alimentation en carburant

(30) Priorität: 20.04.1989 DE 8904997 U
(43) Veröffentlichungstag der Anmeldung: 24.10.1990
(73) Patentinhaber: von Meyerinck, Wolfgang, Dipl.-Ing., D-35457 Lollar (DE); R.H. von Meyerinck GmbH, D-35390 Giessen (DE)
(72) Erfinder: von Meyerinck, Wolfgang, Dipl.-Ing., D-6304 Lollar (DE); von Meyerinck, Dietz, D-6302 Lich 2 (DE)
(74) Vertreter: Missling, Arne, Dipl.-Ing.

(56) Entgegenhaltungen:
- EP-A- 0 167 642
- EP-A- 0 291 876

## Beschreibung

Die Erfindung betrifft ein Betankungssystem mit einem Betankungsarm, welcher aus mehreren Rohrelementen aufgebaut ist, welche jeweils über ein einen Freiheitsgrad aufweisendes Element miteinander verbunden sind und welcher mit einer Versorgungsleitung in Verbindung steht, wobei der Betankungsarm an seinem einen Ende an der in einem Schacht angeordneten Versorgungsleitung angeschlossen ist und über Hebemittel versenkbar bzw. auf Bodenniveau anhebbar ist. Ein Betankungssystem dieser Art ist aus der EP-B1-167 642 bekannt.

Betankungssysteme der genannten Art, müssen, wenn sie zur Betankung von Flugzeugen verwendet werden, im wesentlichen zwei Hauptforderungen erfüllen. Die eine Hauptforderung besteht darin, daß der Betankungsarm auf eine ausreichende Länge ausgefahren werden kann, so daß die Betankung sowohl von sehr großen Flugzeugen als auch von Flugzeugen, welche nicht exakt an der Parkposition abgestellt sind, möglich ist. Die andere Forderung besteht darin, daß das Betankungssystem bei Nichtgebrauch möglichst platzsparend und betriebssicher verräumbar und gegen äußere Einwirkungen geschützt sein muß.

Bei den bekannten Betankungssystemen erweist es sich als nachteilig, daß die einzelnen Rohrelemente des Betankungsarmes relativ sperrig sind und oft nur mit erheblichem Aufwand an das Flugzeug angeschlossen werden können. Zur Erleichterung der Verfahrbarkeit des Betankungsarmes werden weiterhin häufig Fahrgestelle benutzt, auf welchen zumindest Teile des Betankungsarmes gelagert sind, um diese zu dem Flugzeug zu ziehen oder zu schieben. All dies führt dazu, daß der Betankungsarm im nichtbenutzten Zustand kaum oder nur schwer so zusammenlegbar ist, daß er platzsparend untergebracht werden kann. All diese verfahrbaren Systeme haben zu dem den Nachteil, daß sie an den Rand der Hydrantenfläche bei Nichtbenutzung transportiert werden müssen. Bei dem aus der eingangs genannten Patentschrift bekannten Betankungsarm erweist es sich als nachteilig, daß dieser zwar versenkbar aber nur eine relativ geringe Länge aufweist, welche für viele Anwendungszwecke nicht ausreichend ist.

Ein weiterer Nachteil sowohl dieser ebengenannten als auch anderer Betankungsarme besteht darin, daß diese nicht in ausreichender Weise höheneinstellbar sind, um eine am freien Ende des Betankungsarms angebrachte Betankungskupplung mit dem Tankanschluß verschiedener Flugzeuge zu verbinden.

Der Erfindung liegt die Aufgabe zugrunde, ein versenkbares Betankungssystem der eingangs genannten Art zu schaffen, welches bei einfachem Aufbau und leichter Bedienbarkeit einen großen Betankungsbereich sicherstellt und bei Nichtgebrauch platzsparend verräumbar und über eine vergleichsweise kleine, mit einer hochbelastbaren und damit überrollbaren Abdeckung, verschließbarer Öffnung im Boden versenkbar.

Erfindungsgemäß wird die Aufgabe dadurch gelöst, daß die Hebemittel eine bündig zur Bodenfläche anhebbare Plattform umfassen, an welcher ein erstes, um eine vertikale Achse verschwenkbares Gelenk gelagert ist, daß die jeweils angrenzenden Rohrelemente jeweils im wesentlichen horizontal angeordnet, an ihren Enden abgewinkelt und jeweils mittels zumindest eines vertikalen Gelenks miteinander verbunden sind, und daß die Abmessung der Plattform zumindest der Länge des längsten Rohrelements gleich ist.

Das erfindungsgemäße Betankungssystem zeichnet sich durch eine Reihe erheblicher Vorteile aus. Da der Betankungsarm bzw. dessen Rohrelemente so bemessen sind, daß der Betankungsarm im nichtgebrauchten Zustand vollständig oberhalb der Plattform angeordnet werden kann, ist es möglich, den gesamten Betankungsarm mitsamt der Plattform in dem Schacht in einem Flugvorfeld zu versenken. Bei Nichtgebrauch wird somit das gesamte Vorfeld des Flugplatzes freigehalten, so daß Flugzeuge ohne Behinderung rollen können und daß das Wartungs- und Bedienungspersonal nicht durch das Betankungssystem behindert wird. Ein weiterer, wesentlicher Vorteil des erfindungsgemäßen Betankungssystems besteht darin, daß dieses im nichtgebrauchten Zustand keine Unfallgefahr darstellt, so daß keine Maßnahmen zur Verhinderung einer Kollision mit dem Betankungssystem ergriffen werden müssen. Dies ist insbesondere bei schlechten Sichtverhältnissen oder starkem Verkehr auf einem Vorfeld oder den Rollwegen von besonderem Vorteil. Weiterhin erweist es sich als günstig, daß das Betankungssystem im nichtbenutzten Zustand vollständig in dem Schacht aufgenommen werden kann und somit austretende Treibstoffreste oder Dämpfe aufgenommen werden können, ohne daß dadurch die Umwelt belastet wird.

Im gebrauchsbereiten Zustand, in welchem die Plattform auf das Bodenniveau des Vorfeldes oder der Rollwege angehoben ist, besteht zudem nicht die Gefahr, daß Personen in den offenen Schacht stürzen. Dies ist insbesondere dann wichtig, wenn der Betankungsarm verschwenkt wird, um seine Betankungsposition einzunehmen. Insbesondere beim Verschwenken des ersten Rohrarms besteht bei den bekannten, in einem im wesentlichen offenen Schacht angeordneten Betankungsarmen die Gefahr, daß eine Bedienungsperson in den Schacht fällt.

In einer besonders günstigen Weiterentwicklung der Erfindung ist vorgesehen, daß zumindest eines der Rohrelemente mittels eines Stützrades abgestützt ist. Das Stützrad kann dazu dienen, einen Teil des Betankungsarmes abzustützen, es behindert jedoch nicht die freie Entfaltbarkeit des Betankungsarmes bzw. dessen Anordnung auf der Plattform und die Versenkung des Betankungsarmes zusammen mit der Plattform bei Nichtgebrauch.

Um bei großer Länge des Betankungsarmes und einer Vielzahl von einzelnen Rohrelementen das Zusammen legen des Betankungsarmes zu erleichtern, ist erfindungsgemäß vorgesehen, daß ein erstes und ein drittes Rohrelement in gleicher Höhe angeordnet sind und daß ein zweites Rohrelement und ein viertes Rohrelement in unterschiedlichen Höhen zu dem ersten und dem dritten Rohrelement angeordnet sind. Das erste und das dritte Rohrelement können im wesentlichen parallel oder nebeneinander auf der Plattform angeordnet werden, während das zweite und das vierte Rohrelement über dem ersten und dem dritten Rohrelement in einer schräggestellten Lage anzuordnen sind. Hierdurch ist es möglich, die Rohrelemente auf kleinstem Raum anzuordnen. Bei dieser beschriebenen Ausgestaltungsform erweist es sich als günstig, wenn das dritte Rohrelement mittels eines Stützrades abgestützt ist. Da dieses Rohrelement, bezogen auf die übrigen Rohrelemente, am niedrigsten angeordnet ist, kann es mittels des Stützrades abgestützt werden, ohne daß dabei die Verschwenkbarkeit der restlichen Rohrelemente und deren Zusammenlegbarkeit oberhalb der Plattform behindert wird.

Um eine Höheneinstellbarkeit des erfindungsgemäßen Betankungsarmes sicherzustellen, ist zumindest ein Rohrelement um ein horizontales, quer zur Längsachse des Rohrelements angeordnetes Gelenk verschwenkbar. In günstiger Weise ist das zweite Rohrelement so ausgebildet, daß es beidseitig jeweils um eine horizontale Achse verschwenkbar ist.

Um bei der erfindungsgemäß möglichen großen Länge des Betankungsarmes eine erleichterte Höheneinstellbarkeit des freien Endbereiches zu ermöglichen, ist erfindungsgemäß vorgesehen, daß das Stützrad des dritten Rohrelements mit einer Höhenverstellvorrichtung versehen ist.

Das zwischen dem ersten und dritten liegende Rohrelement, das über horizontalliegende Gelenke mittelbar mit diesem verbunden ist, bildet mit einem Lenker, der an Rohrstücke angreift, die zwischen dem ersten und dritten Rohrelement angreifen, ein Parallelogramm. Dieses Parallelogramm gewährleistet, daß die beiden nachgeschalteten vertikalen Gelenke, auch bei einer Höhenverstellung, immer vertikal liegen. Der Vorteil besteht darin, daß die Betankungskupplung immer um ein vertikales Gelenk verschwenkbar ist und somit kein ungewolltes Umschlagen zum tiefsten Punkt erfolgen kann. Des weiteren ist es möglich Stützräder einzusparen.

Die dem vierten Rohrelement nachgeordneten Rohrelemente sind bevorzugterweise abwechselnd um horizontale bzw. vertikale, jeweils um 90° zueinander versetzte Gelenke verschwenkbar und oberhalb des ersten bis vierten Rohrelements angeordnet. Da der Schacht zur Versenkung des Betankungsarmes eine ausreichende Höhe aufweisen kann, spielt die Gesamthöhe des bei Nichtgebrauch zusammengelegten Betankungsarmes keine so große Rolle. Von entscheidender Bedeutung ist vielmehr die im zusammengelegten Zustand benötigte Grundfläche des Betankungsarmes.

Die Ausnehmung für die Plattform ist bevorzugterweise mittels eines gewichtsausgeglichenen Schachtdeckels abdeckbar, welcher im geschlossenen Zustand auch von schweren Flugzeugen befahrbar ist und von einer Bedienungsperson leicht geöffnet bzw. geschlossen werden kann.

Um eine freie Anhebung und Absenkung der Plattform zu gewährleisten, erweist es sich als besonders günstig, wenn die Versorgungsleitung über ein um eine horizontale Achse schwenkbares Gelenk mit einem an seinen Enden abgewinkelten Anschluß-Rohrelement verbunden ist, dessen freies Ende mit einem weiteren, um eine horizontale Achse verschwenkbaren Gelenk in Verbindung steht, welches wiederum über ein Zwischenrohrstück mit dem ersten Gelenk, welches um die vertikale Achse verschwenkbar ist, in Verbindung steht. Diese Ausgestaltung ergibt eine scherenartige Rohrverbindung, welche einer vertikalen Bewegung der Plattform keinen großen Widerstand entgegensetzt.

Im folgenden wird die Erfindung anhand von Ausführungsbeispielen in Verbindung mit der Zeichnung beschrieben. Dabei zeigt:
- Fig. 1: eine schematische Darstellung des erfindungsgemäßen Betankungssystems im gebrauchsfähigen Zustand während der Betankung eines Flugzeuges;
- Fig. 2: eine schematische Darstellung des in Fig. 1 gezeigten Betankungssystems im nichtgebrauchten, versenkten Zustand;
- Fig. 3: eine Draufsicht auf ein Ausführungsbeispiel des erfindungsgemäßen Betankungsarmes im zusammengelegten, nichtgebrauchten Zustand;
- Fig. 4: eine Seitenansicht des in Fig. 3 gezeigten Betankungsarms im ausgefahrenen Zustand; und
- Fig. 5: eine Draufsicht auf die Anordnung gemäß Fig. 4.

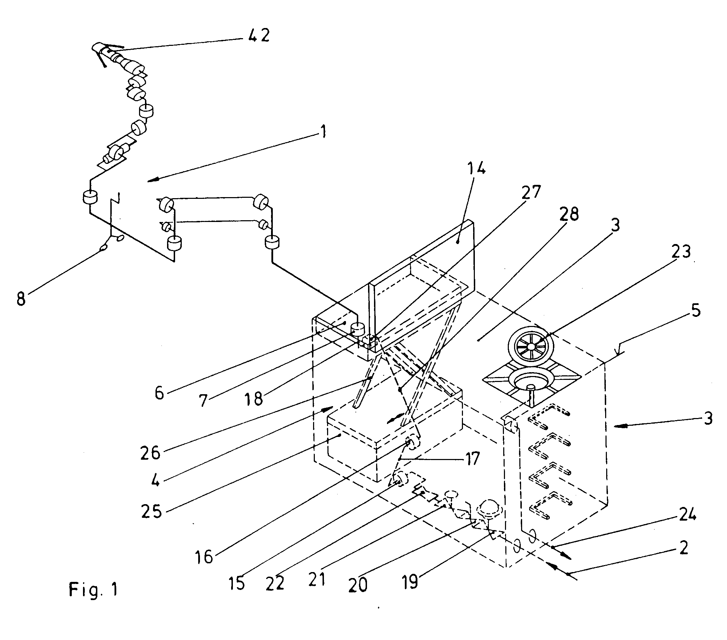

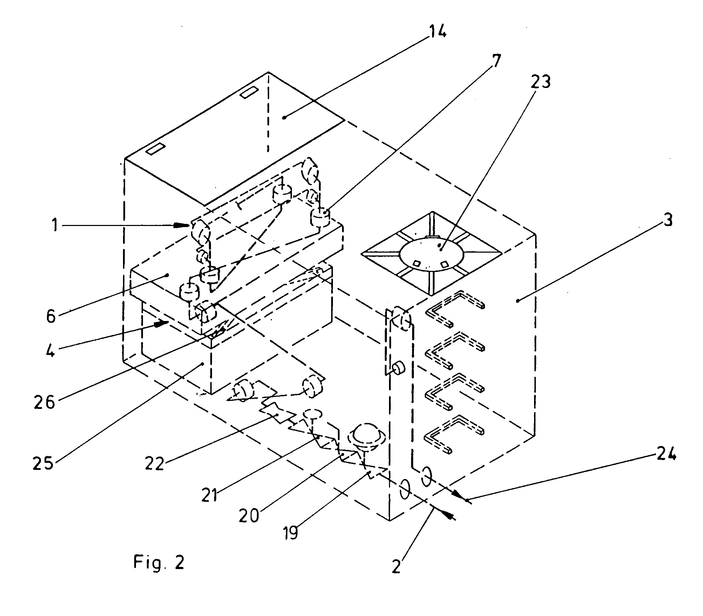

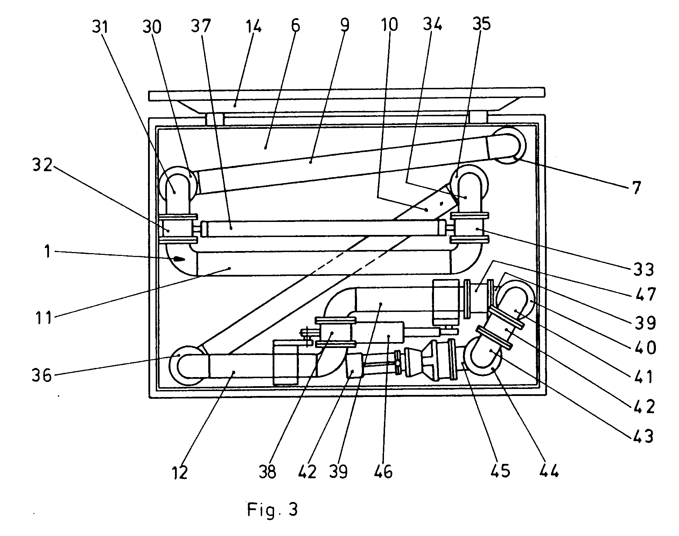

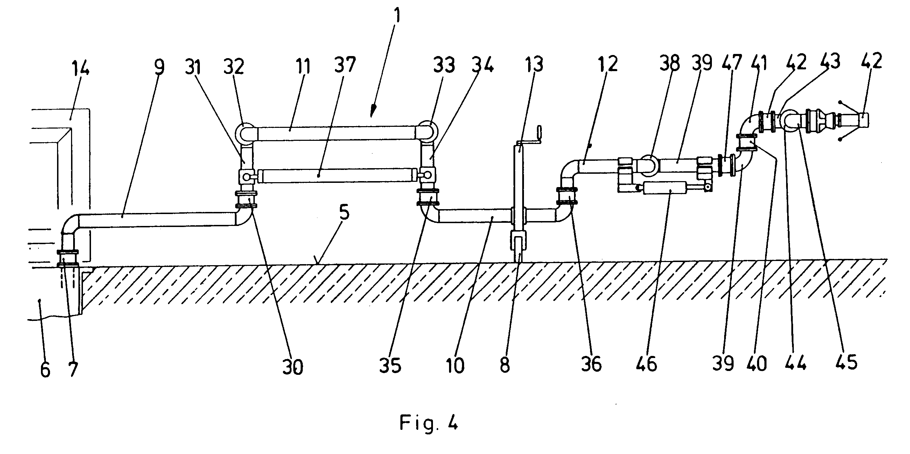

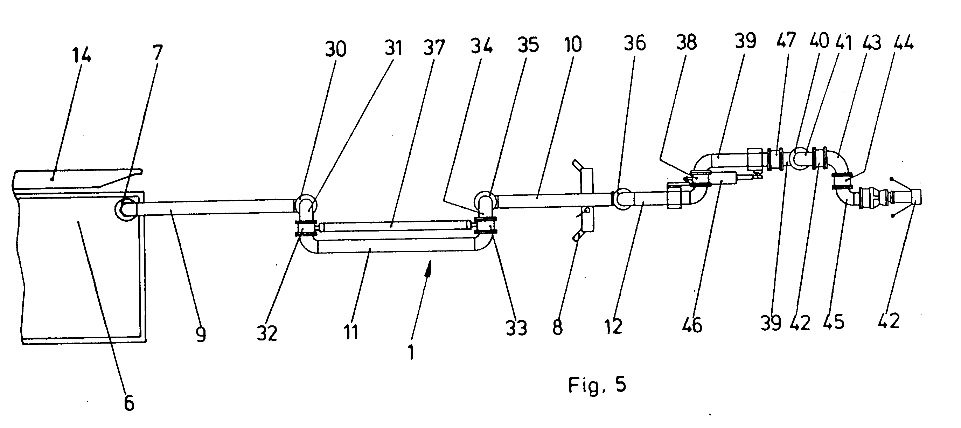

In den Fig. 1 und 2 ist das erfindungsgemäße Betankungssystem in schematischer Weise dargestellt, dabei wurde insbesondere auf die exakte Anordnung der in den Fig. 3 bis 5 gezeigten Rohrelemente, Gelenke und ähnlichen zum Zwecke der klareren Darstellung verzichtet.

Das erfindungsgemäße Betankungssystem umfaßt einen Betankungsarm 1, welcher über ein um eine vertikale Achse verschwenkbares erstes Gelenk 7 mit einer Plattform 6 verbunden ist. Die Plattform 6 ist mittels Hebemitteln 4 von dem Niveau einer Bodenfläche 5 in einen Schacht 3 versenkbar (siehe Fig. 2), wenn der Betankungsarm oberhalb der Plattform 5 zusammengelegt wurde und sich in seinem Nichtgebrauchszustand befindet.

In dem Schacht ist eine Versorgungsleitung 2 angeordnet, welche eine Druckausgleichseinrichtung 19, eine Absperrarmatur 20, ein Betankungsventil 21 sowie ein Venturirohr 22 umfaßt.

An dem Schacht ist weiterhin an der Oberseite eine Mannluke 23 zum Betreten des Schachtes 3 vorgesehen, sowie eine Rückführ- und Entleerungsleitung 24.

Die Hebemittel 4 umfassen eine Bodenplatte 25, an welcher ein Scherenmechanismus 26 gelagert ist, welcher in nicht dargestellter Weise betätigbar ist, beispielsweise pneumatisch, hydraulisch oder auf sonstige Weise. An der Oberseite des Scherenmechanismus ist die Plattform 6 gelagert.

Um eine Anhebung bzw. Absenkung der Plattform 6 zu ermöglichen, ist an der Versorgungsleitung 2 ein um eine horizontale Achse verschwenkbares Gelenk 15 vorgesehen, welches mit einem Anschluß-Rohrelement 17 verbunden ist, dessen Enden, wie dargestellt, jeweils um 90° abgewinkelt, in einer Ebene angeordnet und in entgegengesetzte Richtungen weisend ausgebildet sind. Das freie Ende des Anschluß-Rohrelements 17 ist mit einem um eine horizontale Achse verschwenkbaren Gelenk 16 verbunden. An dieses Gelenk 16 schließt sich ein Zwischenrohrstück 28 an, dessen Enden, ähnlich wie bei den Anschluß-Rohrelement 17 ebenfalls rechtwinklig angeordnet sind. Am Ende des Zwischenrohrstücks 28 ist zumindest ein weiteres, um eine horizontale Achse verschwenkbares Gelenk 27 vorgesehen. Das Zwischenrohrstück 18 verbindet dann das Gelenk 27 mit dem ersten Gelenk 7, welches an der Plattform 6 angeordnet ist.

Die Fig. 2 zeigt die in Fig. 1 gezeigte Anordnung in schematischer Weise im zusammengelegten, nicht benötigten Zustand. Dabei ist insbesondere ersichtlich, daß der Betankungsarm 1 vollständig oberhalb der Plattform 6 zusammengelegt und zusammen mit dieser in den Schacht 3 versenkbar ist.

Zur Abdeckung des bei abgesenkter Plattform 6 gebildeten Loches dient ein gewichtsausgeglichener Schachtdeckel 14.

Die Fig. 3 bis 5 zeigen jeweils ein konkretes Ausführungsbeispiel des erfindungsgemäßen Betankungsarmes. An das erste Gelenk 7 schließt sich ein um 90° abgewinkeltes Rohrstück 9 an, dessen Enden jeweils um 90° abgewinkelt sind und in unterschiedlichen, zueinander senkrechten Ebenen angeordnet sind. An das erste Rohrelement 9 schließt sich ein Gelenk 30 an, welches um eine vertikale Achse verschwenkbar ist. Mit dem Gelenk 30 ist ein Rohrstück 31 verbunden, welches rechtwinklig abgewinkelt ist und welchem ein Gelenk 32 folgt, das eine Verschwenkung um eine horizontale Achse ermöglicht. An das Gelenk 32 ist ein zweites Rohrelement 11 angeschlossen, dessen Enden jeweils um 90° abgewinkelt sind, in einer Ebene liegen und in die gleiche Richtung weisen. Dem zweiten Rohrelement 11 ist ein Gelenk 33 nachgeordnet, welches eine Verschwenkung um eine horizontale Achse ermöglicht. An das Gelenk 33 schließt sich ein rechtwinklig abgewinkeltes Rohrstück 34 an, welchem ein Gelenk 35 folgt, das um eine vertikale Achse verschwenkbar ist. Die Rohrstücke 31 und 34 werden durch einen Lenker 37 verbunden, der parallel zu dem Rohrelement 11 angeordnet ist. Dadurch bilden die Rohrstücke 31, 34, der Lenker 37 und das Rohrelement 11 ein Parallelogramm. Hierdurch ist gewährleistet, daß die Gelenke 35 und 36 immer vertikal ausgerichtet sind. Dem Gelenk 35 folgt ein drittes Rohrelement 10, dessen Enden, ähnlich wie bei dem zweiten Rohrelement 12, beide um 90° abgewinkelt und in die gleiche Richtung weisend, angeordnet sind. Dem dritten Rohrelement 10 folgt ein um eine vertikale Achse verschwenkbares Gelenk 36, welches mit einem vierten Rohrelement 12 verbunden ist. Die Enden des vierten Rohrelements 12 sind jeweils um 90° abgewinkelt und in unterschiedlichen Ebenen angeordnet.

Das erste und das dritte Rohrelement 9, 10 sind im wesentlichen in der gleichen Höhe vorgesehen, wobei das Rohrelement 10 mittels eines Stützrades 8 an der Bodenfläche 5 abgestützt. Das Stützrad 8 des dritten Rohrelements 10 ist mit einer Höhenverstellvorrichtung 13 versehen, welche beispielsweise in Form einer handbetätigbaren Verstellspindel ausgebildet sein kann. Bei der in Fig. 3 gezeigten Anordnung im zusammengelegten Zustand wurde darauf verzichtet, das Stützrad 8 und die Höhenverstellvorrichtung 13 abzubilden. Aus Fig. 3 ist ersichtlich, daß die beiden Rohrelemente 9 und 10 jeweils in gleicher Höhe im wesentlichen nebeneinander angeordnet werden können, während das in einer größeren Höhe vorgesehene zweite Rohrelement 11 oberhalb des dritten Rohrelements 10 zu liegen kommt. In ähnlicher Weise weist das vierte Rohrelement 12 eine größere Höhe auf, als das erste und das dritte Rohrelement 9, 10.

Über das Gelenk 38 unter Verbindung der Rohrstücke 12 und 39 ist eine Gewichtsausgleichseinrichtung 46 vorgesehen, die eine freie Balancierung der Rohrstücke 39 bis zur Betankungskupplung 42 gewährleistet.

An das vierte Rohrelement 12 schließt sich ein Gelenk 38 an, welches um eine horizontale Achse verschwenkbar ist. Dem Gelenk 38 folgt ein Rohrelement 39, dessen Enden, ähnlich wie bei dem ersten Rohrelement 9, jeweils um 90° abgewinkelt sind, jedoch in zueinander um 90° versetzt angeordneten Ebenen angeordnet sind. Dem Rohrelement 39 folgt ein um eine vertikale Achse verschwenkbares Gelenk 40, welches mit einem um 90° gebogenen Rohrstück 41 in Verbindung steht.

Die weitere Ausgestaltung des erfindungsgemäßen Betankungsarms ist in Fig. 3 im einzelnen nicht dargestellt, um die Zusammenlegbarkeit des Betankungsarmes besser zeigen zu können. Es ist lediglich eine am freien Ende des Betankungsarmes vorgesehene Betankungskupplung 42 dargestellt.

Dem Rohrstück 41 folgt ein um eine horizontale Achse schwenkbares Gelenk 42, welches mit einem um 90° abgebogenen Rohrstück 43 verbunden ist. An das Rohrstück 43 schließt sich ein Gelenk 44 an, welches um eine horizontale Achse verschwenkbar ist und an welchem ein Rohrstück 45 angeschlossen ist, welches ebenfalls um 90° abgewinkelt ist und an dessen Ende die Betankungskupplung 42 befestigt ist.

Für eine zusätzliche Absenkung kann in das Rohrelement 39 ein zusätzliches horizontalliegendes sperrbares Gelenk 47 eingesetzt werden.

Das erfindungsgemäße Betankungssystem gestattet es somit, den Betankungsarm auf eine sehr große Länge auszufahren und insbesondere an seinem freien Endbereich an die unterschiedlichen erforderlichen Betankungshöhen anzupassen. Weiterhin ist der Betankungsarm in einfacher Weise so zusammenlegbar, daß er oberhalb der Plattform angeordnet und zusammen mit dieser in dem Schacht versenkt werden kann.

## Patentansprüche

1. Betankungssystem mit einem Betankungsarm (1), welcher aus mehreren Rohrelementen aufgebaut ist, welche jeweils über ein einen Freiheitsgrad aufweisendes Gelenk miteinander verbunden sind, und welcher mit einer Versorgungsleitung (2) verbunden ist, wobei der Betankungsarm an seinem einen Ende mit der in einem Schacht (3) angeordneten Versorgungsleitung (2) verbunden und über Hebemittel (4) versenkbar bzw. auf Bodenniveau anhebbar ist, dadurch gekennzeichnet, daß die Hebemittel (4) eine bündig zur Bodenfläche (5) anhebbare Plattform (6) umfassen, an welcher ein erstes, um eine vertikale Achse verschwenkbares Gelenk (7) gelagert ist, daß die jeweils angrenzenden Rohrelemente jeweils im wesentlichen horizontal angeordnet, an ihren Enden abgewinkelt und jeweils mittels zumindest eines vertikalen Gelenks miteinander verbunden sind und daß die Abmessung der Plattform (6) zumindest der Länge des längsten Rohrelements gleich ist.

2. Betankungssystem nach Anspruch 1, dadurch gekennzeichnet, daß zumindest das Rohrelement (10) mittels eines Stützrades (8) abgestützt ist.

3. Betankungssystem nach Anspruch 1 oder 2, dadurch gekennzeichnet, daß ein erstes (9) und ein drittes (10) Rohrelement in gleicher Höhe angeordnet sind, und daß ein zweites Rohrelement (11) und ein viertes Rohrelement (12) in unterschiedlichen Höhen zu dem ersten (9) und dem dritten (10) Rohrelement angeordnet sind.

4. Betankungssystem nach einem der Ansprüche 1 bis 3, dadurch gekennzeichnet, daß zumindest ein Rohrelement (39) um ein horizontales, quer zur Längsachse des Rohrelements (12) angeordnetes Gelenk (38) verschwenkbar ist.

5. Betankungssystem nach Anspruch 4, dadurch gekennzeichnet, daß das zweite Rohrelement (11) beidseitig um eine horizontale Achse verschwenkbar gelagert ist.

6. Betankungssystem nach Anspruch 5, dadurch gekennzeichnet, daß parallel zu dem Rohrelement (11) ein Lenker (37) angeordnet ist, der zusammen mit dem Rohrelement (11) ein Parallelogramm bildet.

7. Betankungssystem nach Anspruch 6, dadurch gekennzeichnet, daß das Stützrad (8) mit einer Höheneinstellvorrichtung (13) versehen ist.

8. Betankungssystem nach einem der Ansprüche 3 bis 7, dadurch gekennzeichnet, daß weitere, dem vierten Rohrelement (12) nachgeordnete Rohrelemente abwechselnd um horizontale und vertikale, jeweils um 90° zueinander versetzte Gelenke verschwenkbar sind.

9. Betankungssystem nach Anspruch 8, dadurch gekennzeichnet, daß das Rohrstück (39) über ein Gewichtsausgleichsystem (46) mit dem Rohrstück (12) verbunden ist, so daß das Gewichtsausgleichsystem (46) die Rohrstücke (39 bis 45) einschließlich der Betankungskupplung (42) in Balance hält.

10. Betankungssystem nach einem der Ansprüche 1 bis 9, dadurch gekennzeichnet, daß die Ausnehmung für die Plattform (6) mittels eines gewichtsausgeglichenen Schachtdeckels (14) abdeckbar ist.

11. Betankungssystem nach einem der Ansprüche 1 bis 10, dadurch gekennzeichnet, daß die die Plattform (6) anhebenden Hebemittel (4) hydraulische oder elektrische Antriebe sind oder aus Ausgleichsgewichten bestehen.

12. Betankungssystem nach einem der Ansprüche 1 bis 11, dadurch gekennzeichnet, daß die Versorgungsleitung (2) über ein um eine horizontale Achse schwenkbares Gelenk (15) mit einem an seinen Enden abgewinkelten Anschluß-Rohrelement (17) verbunden ist, dessen freies Ende mit einem weiteren, um eine horizontale Achse verschwenkbaren Gelenk (16) in Verbindung steht, welches wiederum über ein Zwischenrohrstück (28) und über ein weiteres um eine horizontale Achse schwenkbares Gelenk (27) an einem mit dem vertikalen Gelenk (7) verbundenen Rohrstück (18) verbunden ist.

13. Betankungssystem nach einem der Ansprüche 1 bis 12, dadurch gekennzeichnet, daß das Betankungssystem mit einer Venturirohrsteuerung (22), einer Druckausgleichseinrichtung (19), einer Rückspüleinrichtung (24) und einem Betankungsventil (21) versehen ist.

## Claims

1. A refuelling system with a refuelling arm (1) which is composed of several pipe elements connected to one another by means of respective joints having a degree of freedom, and which is connected to a supply line (2), wherein one end of the refuelling arm is connected to the supply line (2) arranged in a pit (3) and may be lowered or lifted to ground level by way of lifting means (4), characterised in that the lifting means (4) comprise a platform (6) which may be lifted so as to be flush with the ground surface (5) and on which is mounted a first joint (7) which is pivotable about a vertical axis, in that the respectively adjoining pipe elements are in each case arranged so as to be substantially horizontal, are bent at their ends and are connected to one another by at least one vertical joint respectively, and in that the dimension of the platform (6) is at least equal to the length of the longest pipe element.

2. A refuelling system according to claim 1, characterised in that at least the pipe element (10) is supported by means of a support wheel (8).

3. A refuelling system according to claim 1 or 2, characterised in that a first (9) and a third (10) pipe element are arranged at the same height, and in that a second pipe element (11) and a fourth pipe element (12) are arranged at different heights from the first (9) and the third (10) pipe element.

4. A refuelling system according to one of claims 1 to 3, characterised in that at least one pipe element (39) is pivotable about a horizontal joint (38) arranged transversely to the longitudinal axis of the pipe element (12).

5. A refuelling system according to claim 4, characterised in that the second pipe element (11) is mounted at each end so as to be pivotable about a horizontal axis.

6. A refuelling system according to claim 5, characterised in that a guide rod (37) is arranged parallel to the pipe element (11) which together with the pipe element (11) forms a parallelogram.

7. A refuelling system according to claim 6, characterised in that the support wheel (8) is provided with a vertical adjustment device (13).

8. A refuelling system according to one of claims 3 to 7, characterised in that further pipe elements disposed downstream of the fourth pipe element (12) are alternately pivotable about horizontal and vertical joints respectively staggered by 90° relative to one another.

9. A refuelling system according to claim 8, characterised in that the pipe piece (39) is connected via a counterweight system (46) to the pipe piece (12) so that the counterweight system (46) holds the pipe pieces (39 to 45) including the refuelling coupling (42) in balance.

10. A refuelling system according to one of claims 1 to 9, characterised in that the recess for the platform (6) may be covered by means of a counterweighted pit cover (14).

11. A refuelling system according to one of claims 1 to 10, characterised in that the lifting means (4) lifting the platform (6) are hydraulic or electric drives or consist of counterweights.

12. A refuelling system according to one of claims 1 to 11, characterised in that the supply line (2) is connected via a joint (15) which is pivotable about a horizontal axis to a connection pipe element (17), the ends of which are bent and the free end of which is connected to a further joint (16) which is pivotable about a horizontal axis, this in turn being connected via an intermediate pipe piece (28) and via a further joint (27) which is pivotable about a horizontal axis to a pipe piece (18) which is connected to the vertical joint (7).

13. A refuelling system according to one of claims 1 to 12, characterised in that the refuelling system is provided with a Venturi tube control (22), a pressure compensation device (19), a reflushing device (24) and a refuelling valve (21).

## Revendications

1. Système d'alimentation en carburant avec un bras d'alimentation en carburant (1), lequel est constitué de plusieurs éléments de tuyauterie qui sont reliés les uns aux autres, chacun par une articulation présentant un degré de liberté, et lequel est relié à une ligne d'alimentation (2), le bras d'alimentation en carburant (1) étant relié par l'une de ses extrémités à la ligne d'alimentation (2) placée dans une cuve (3), et pouvant être abaissé ou élevé au niveau du sol par des moyens de levage (4),
caractérisé en ce que les moyens de levage (4) comprennent une plate-forme (6) pouvant être élevée au niveau de la surface du sol (5), sur laquelle est montée une première articulation (7) pouvant pivoter autour d'un axe vertical,
en ce que les éléments de tuyauterie voisins sont chacun montés pour l'essentiel horizontalement, coudés à leurs extrémités et sont reliés les uns aux autres chacun au moyen d'au moins une articulation verticale
et en ce que la dimension de la plate-forme (6) est au moins égale à la longueur de l'élément de tuyauterie le plus long.

2. Système d'alimentation en carburant selon la revendication 1, caractérisé en ce qu'au moins l'élément de tuyauterie (10) est supporté au moyen d'une roue de support (8).

3. Système d'alimentation en carburant selon la revendication 1 ou 2, caractérisé en ce qu'un premier (9) et un troisième (10) éléments de tuyauterie sont montés à la même hauteur, et qu'un deuxième élément de tuyauterie (11) et un quatrième élément de tuyauterie (12) sont montés à des hauteurs différentes par rapport au premier (9) et au troisième (10) éléments de tuyauterie.

4. Système d'alimentation en carburant selon l'une des revendications 1 à 3, caractérisé en ce qu'au moins un élément de tuyauterie (39) peut pivoter autour d'une articulation (38) horizontale, montée perpendiculairement à l'axe longitudinal de l'élément de tuyauterie (12).

5. Système d'alimentation en carburant selon la revendication 4, caractérisé en ce que le deuxième élément de tuyauterie (11) est monté des deux côtés de manière à pivoter autour d'un axe horizontal.

6. Système d'alimentation en carburant selon la revendication 5, caractérisé en ce que parallèlement à l'élément de tuyauterie (11) est monté un bras (37), qui forme avec l'élément de tuyauterie (11) un parallélogramme.

7. Système d'alimentation en carburant selon la revendication 6, caractérisé en ce que la roue de support (8) est pourvue d'un dispositif de réglage de hauteur (13).

8. Système d'alimentation en carburant selon l'une des revendications 3 à 7, caractérisé en ce que d'autres éléments de tuyauterie montés en aval du quatrième élément de tuyauterie (12) peuvent pivoter autour d'articulations alternativement horizontales et verticales, formant respectivement l'une par rapport à l'autre un angle de 90°.

9. Système d'alimentation en carburant selon la revendication 8, caractérisé en ce que l'élément de tuyauterie (39) est relié à l'élément de tuyauterie (12) par un système d'équilibrage des masses (46), de telle manière que ce système d'équilibrage des masses (46) maintient en équilibre les éléments de tuyauterie (39 à 45), coupleur d'alimentation en carburant (42) compris.

10. Système d'alimentation en carburant selon l'une des revendications 1 à 9, caractérisé en ce que l'évidement pour la plate-forme (6) peut être recouvert d'un couvercle de cuve (14) de masse équilibrée.

11. Système d'alimentation en carburant selon l'une des revendications 1 à 10, caractérisé en ce que les moyens de levage (4) élevant la plate-forme (6) sont des entraînements hydrauliques ou électriques ou sont constitués de masses d'équilibrage.

12. Système d'alimentation en carburant selon l'une des revendications 1 à 11, caractérisé en ce que la ligne d'alimentation (2) est reliée, par une articulation (15) pouvant pivoter autour d'un axe horizontal, à un élément de tuyauterie de raccordement (17) coudé à l'une de ses extrémités, dont l'extrémité libre est en liaison avec une autre articulation (16) pouvant pivoter autour d'un axe horizontal, laquelle pour sa part est reliée, par un élément de tuyauterie intermédiaire (28) et par une autre articulation (27) pouvant pivoter autour d'un axe horizontal, à un élément de tuyauterie (18) relié à l'articulation verticale (7).

13. Système d'alimentation en carburant selon l'une des revendications 1 à 12, caractérisé en ce que le système d'alimentation en carburant est pourvu d'une commande par tube de Venturi (22), d'un dispositif d'équilibrage de pression (19), d'un dispositif de retour (24) et d'une vanne d'alimentation en carburant (21).
